# EUROPEAN PATENT SPECIFICATION

(11) **EP 2 848 733 B1**
(45) Date of publication and mention of the grant of the patent: **22.01.2020**
(21) Application number: 13787522.5
(22) Date of filing: 29.04.2013
(51) Int. Cl.: D07B 1/12, D07B 1/02, D07B 5/08, B27J 1/02

(54) **SYNTHETIC ROD FOR CLOSURE, DECORATION AND SCREENING**
SYNTHETISCHE STANGE FÜR VERSCHLUSS, DEKORATION UND SCREENING
TIGE SYNTHÉTIQUE POUR CLÔTURE, DÉCORATION ET OCCULTATION

(30) Priority: 09.05.2012 ES 201200461 U
(43) Date of publication of application: 18.03.2015
(73) Proprietor: Catral Garden & Home Depot S.A., 03150 Catral (Alicante) (ES)
(72) Inventor: LATORRE MARIN, Jose Maria, E-03158 Catral (Alicante) (ES)
(74) Representative: Martin Alvarez, Juan Enrique
(86) International application number: PCT/ES2013/000107
(87) International publication number: WO 2013/167768

(56) References cited:
- WO-A1-2004/090022
- CN-Y- 201 313 338
- FR-A5- 2 032 623
- JP-A- 2004 002 583
- US-A- 3 761 346
- US-A- 4 143 105
- US-A- 4 231 834
- US-A1- 2005 138 770

## Description

### Object of the Invention

This invention refers to a synthetic rod for enclosures, decoration and screens, which contributes essential new features and notable advantages compared to the means already known and used for the same ends in the current state of the art.

More particularly, the invention proposes the creation of a synthetic rod, especially designed to make elements which can be used as ways of enclosing and screening all kinds of private spaces, such as gardens, patios, etc., and which may also be used as decorative elements, the elements of which are obtained by weaving together a large number of rods using binding means such as wire or similar. The synthetic rods for enclosures, decoration and screens are obtained by extrusion of a plastic material obtained principally from PVC which has been subjected previously to a foaming treatment to reduce the density, and with the inclusion of wood sawdust in the composition of the rod material to give it the desired degree of finish, for the purposes of imitating any of the materials usually used for the same ends, such as wicker, cane, bamboo, etc.

The field of application of the invention is included principally in the industrial sector devoted to the transformation of materials, in particular plastic materials for the manufacture of elements for enclosures, decoration and screens.

### Background and Summary of the invention

Natural wicker is a plant fibre obtained from bushes in the willow family, which may be woven and used in the manufacture of a large number of objects such as furniture, baskets, etc. This weaving process uses the stalk and the branches of the plant, either with their own dimensions or dividing the branches if they are of a thickness unsuitable to be woven easily. With the same purposes and procedures, other plants such as cane and bamboo, amongst others, or tree bark, are used; like wicker, these have been used since remote times to make a large variety of objects, given that they are light but robust materials, making them very suitable for the manufacture of furniture and other objects at affordable prices.

One of the usual applications for these plant fibres is a utility which is much appreciated by users, consisting of using the rods and branches to make enclosure elements, in the form of panels, in which a large number of rods are bound together, in adjacent fashion, using tying means such string, wire or similar. These panels are then applied to vertical fences or other methods of support, thus providing a suitable means of enclosing spaces such as balconies, patios, gardens, etc. They may also be used, obviously, as a screen or privacy protection for such spaces, and for decorative purposes in the home or garden.

US 3,761,346 discloses a composite linear textile material wherein the composite includes a multifilament core or bundle of closely packed continuous glass filaments surrounded by a flexible layer of coating of plastic composition. The coating has cells or voids (18) that vary in size. The rod described does not comprise a hollow which is extended along its whole length of the rod.

US 3,761,346 and US2005/138770 disclose that plastic material comprise wood pulp or wood sawdust which is suitable to give it a appearance similar to that of natural wicker.

US4143105 discloses a rod section and a plastic material which can be coloured. The interior of hollow rod section consists of finely porous polyethylene. The surface zone has a plurality of bark-like protuberances.

JP 2004 002583 discloses a wood-like molded article which can be molded as a rectangular floor material having a plurality of hollow portions, wherein said article is a mixture of pulverized wood waste material, pulverized resin waste material and a fluorine resin which are melted and kneaded before extruding or injection molding, wherein said resin may be obtained from waste flexible PVC, waste rigid PVC or waste foamed PVC.

Document US 4231834, discloses a tubular article made from synthetic thermoplastic materials which resemble wood, wicker or similar natural materials for the production of furnitures. Each tubular article comprises a node (25). The article does not comprise wood sawdust because the tubular articles are painted. The tubular articles are tyed by a strap of PVC in order to give the precise appearance and tactile sensation of a piece of furniture.

Having said this, the use of these plant fibres or plants, such as wicker or tree bark, is not always possible because of the occasional shortage of raw material in the places where the aforementioned objects are used or made, or because of the need to protect natural resources, to avoid the undesired results of these resources being exhausted or over-exploited. Given the above reasons, it would be desirable to have a synthetic product which is suitable as a replacement for natural products, avoiding excessive use of the natural material, and which has properties of strength and finish which make it a successful replacement for the natural product. In addition, it would also be desirable for the synthetic product to have characteristics including the use of waste materials, and also that it should be recyclable.

The above objective has been fully met with this synthetic rod for enclosures, decoration and screens which will be the object of the following description, the principal characteristics of which are set out in the features section of the attached claim 1.

In essence, the synthetic rod for enclosures, decoration and screens proposed by this invention consists of a rod of a certain length, with dimensions determined in advance according to its possible applications, obtained using extrusion of a plastic-based composition, with the addition of a filler which helps to achieve the desired final finish characteristics for said rod. The configuration of the rod may respond to any cross section desired (circular, ellipsoidal, flattened on two of its opposite faces, oval, or any other polygonal configuration) and, because it is obtained by extrusion, it may be constructed in such a way that it has the additional characteristics of displaying certain external thickening along its length to simulate the knots, shoots or buds of the plant or natural plant fibre it is designed to imitate, or may also be presented in any colour or surface finish.

According tot he invention, the plastic material for the manufacture of the synthetic rod for enclosures, decoration and screens is rigid PVC (unplasticised PVC) subjected to a foaming treatment to reduce its density (i.e. to give it a greater degree of lightness), the composition of which includes an addition of wood sawdust to give it a final appearance which imitates that of rods made of natural product, such as wicker, cane, bamboo, tree bark, and so on. This achieves the twofold objective of obtaining, on the one hand, a light rod which has sufficient rigidity to be woven and used to make panels for enclosures, decoration and screening of spaces as described previously, and, on the other hand, making use of and appraising products such as wood sawdust, which would otherwise be discarded as waste. The final result is a rod formed of the composition of foamed rigid PVC material and wood sawdust, as mentioned above, which also meets the objective of being recyclable.

In addition, the rods can have slightly different shapes so that, when woven, they imitate the diversity of shapes of the natural product, and even combine rods of different colours and textures, or which imitate different plant fibres, such as cane or bamboo, for example, or tree bark, generating aesthetic effects according to the user's preferences and tastes.

Finally, because of the characteristics of the PVC, it is a finished product which does not create a flame when it burns and extinguishes itself when the heat source is removed, a feature which makes it particularly attractive for the proposed applications.

### Brief Description of the Drawings

These and other characteristics and advantages of the invention will be more clearly demonstrated from the following detailed description of an example of a preferred embodiment thereof, which is given solely for illustrative purposes and is not restrictive, with reference to the accompanying drawings, in which:
Figure 1 is a general, schematic, perspective view of a portion of rod constructed according to this invention, and
Figure 2 is a top view of the rod in Figure 1 taken from one end of the rod.

### Description of a Preferred Embodiment

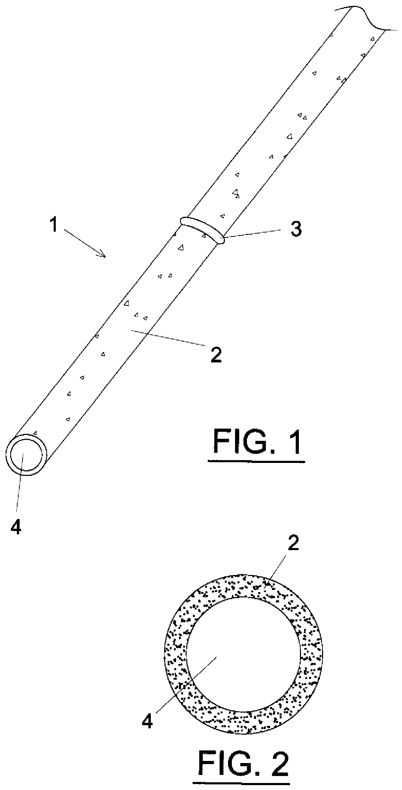

As stated previously, the detailed description of the preferred embodiment of the object of the invention will be given below with the help of the attached drawings, in which the same numerical references are used to designate identical or equivalent parts. Thus, Figure 1 of the drawings shows a schematic view, in perspective, of a synthetic rod for enclosures and decoration constructed according to the invention. As shown, the rod has been indicated throughout with the numerical reference 1, and comprises a body 2, with a substantially lengthened shape, the length of which varies according to the different needs or applications, constructed from the previously described composition, i.e. based on PVC plastic material which has been foamed to reduce its density and the resulting weight, with wood sawdust added. Rod 1 is also made lighter by the fact that it has a hollow interior 4 which extends along its whole length.

This configuration can be seen better in Figure 2 of the drawings, which represents a schematic view, from the top, of one end of the body of the synthetic rod for enclosures and decoration, and which clearly shows the hollow interior 4 of the rod.

In addition, as mentioned previously, the cross section of the rod may vary depending on the preferences or needs. In the case represented, body 2 of the rod shows a circular cross-section, in which its hollow interior 4 with the same circular configuration can be seen. However, as stated above, the circular form of embodiment of the rod for enclosures, decoration and screens shown in said Figure is only an example of construction, given that the synthetic rod can be made with multiple sections which may be circular, ellipsoidal and oval or any other shape which is best adapted to the intended application.

According to the above explanation, the inclusion of wood sawdust in the composition from which the rod 1 is constructed means that it can be given a texture and surface finish which is similar to the appearance of the natural product, such as wicker or another natural fibre or plant, or tree bark. This effect has been represented with surface dots which are visible in both Figure 1 and Figure 2 . Similarly, to increase the similarity between the final external appearance of the synthetic rod 1 and a rod made of natural product, rod 1 may also optionally have thickenings 3 in certain positions, separated along its length by variable distances, which simulate the knots, buds or shoots to be found on rods of natural product, thus increasing the similarity which has just been mentioned, and in such a way that the rod can be woven together with a multitude of other rods of the same or different type and with differences which imitate natural variety, using a means of tying, preferably wire or something similar, so that it can be applied as an element of enclosure, decoration or screening of spaces as explained earlier.

It is not considered necessary to extend the content of this description so that an expert in the matter can understand its scope and the advantages deriving from it, and carry out the practical embodiment of its object.

The above notwithstanding, and given that the description given corresponds solely to a preferred method of embodiment, it will be understood that the essential nature of the invention permits the introduction of multiple modifications and variations in detail, also included within the scope of the invention, and which in particular may affect characteristics such as the shape, the size or the manufacturing materials, or any others which do not alter the invention as described and as defined in the following claims.

## Claims

1. A synthetic rod for creating enclosures, for decoration and for making screens by being bound together with a number of other rods of the same or different kind, **characterised in that** the rod (1) comprises a body (2) extruded from a composition consisting of unplasticised PVC which has been foamed and wood sawdust filler, wherein said rod has a single hollow interior (4) which extends along its whole length.

2. A synthetic rod according to claim 1, wherein the body (2) of the rod has thickenings (3) at certain positions along its length, separated by variable distances, to simulate the knots, shoots or buds of a natural rod.

3. A synthetic rod according to claim 1 or claim 2, wherein the foamed PVC comprising wood sawdust filler is recyclable.

4. A synthetic rod according to any of claims 1 to 3, wherein the synthetic rod is self-extinguishing.

5. A synthetic rod according to any of claims 1 to 4, wherein the body of the rod and hollow interior have a circular cross-section.

6. A screen for creating enclosures or for decoration comprising a plurality of rods according to any of claims 1 to 5 bound together.

## Patentansprüche

1. Synthetische Stange für die Erstellung von Verschlüssen, für Dekoration und für die Herstellung von Abschirmungen, indem sie zusammen mit einer Anzahl von anderen Stangen der gleichen oder unterschiedlicher Art gebunden wird, **dadurch gekennzeichnet, dass** die Stange (1) einen Körper (2) umfasst, welcher aus einer Zusammensetzung bestehend aus unplastifiziertem PVC extrudiert wird, welches geschäumt worden ist, und Holzmehlfüllstoff, wobei die genannte Stange ein einziges hohles Innere (4) aufweist, welches sich entlang der Gesamtlänge derselben erstreckt.

2. Synthetische Stange nach Anspruch 1, wobei der Körper (2) der Stange an bestimmten Stellen entlang der Länge derselben Verdickungen (3) aufweist, welche mit variablen Abständen getrennt sind, um die Äste, Sprosse oder Augen einer natürlichen Stange zu simulieren.

3. Synthetische Stange nach Anspruch 1 oder Anspruch 2, wobei das geschäumte PVC, welches Holzmehlfüllstoff umfasst, recycelbar ist.

4. Synthetische Stange nach einem der Ansprüche 1 bis 3, wobei die synthetische Stange selbstverlöschend ist.

5. Synthetische Stange nach einem der Ansprüche 1 bis 4, wobei der Körper der Stange und das hohle Innere einen kreisförmigen Querschnitt aufweisen.

6. Abschirmung für die Erstellung von Verschlüssen oder für Dekoration umfassend eine Vielzahl von Stangen nach einem der Ansprüche 1 bis 5, welche miteinander gebunden sind.

## Revendications

1. Tige synthétique pour créer des clôtures, pour la décoration et pour fabriquer des occultations en unissant ensemble avec des nombreuses autres tiges du même type ou différentes, **caractérisée en ce que** la tige (1) comprend un corps (2) extrudé à partir d'une composition composée de PVC non plastifié ayant été moussée et un rembourrage de sciures de bois, dans laquelle ladite tige a un seul intérieur creux (4) qui s'étend le long de toute sa longueur.

2. Tige synthétique selon la revendication 1, dans laquelle le corps (2) de la tige a des épaississements (3) à certaines positions le long de sa longueur, séparés par des distances variables, pour simuler les nœuds, les pousses ou les boutons d'une tige naturelle.

3. Tige synthétique selon la revendication 1 ou la revendication 2, dans laquelle le PVC moussé comprenant un rembourrage de sciures de bois est recyclable.

4. Tige synthétique selon l'une quelconque des revendications 1 à 3, dans laquelle la tige synthétique est auto-extinguible.

5. Tige synthétique selon l'une quelconque des revendications 1 à 4, dans laquelle le corps de la tige et l'intérieur creux ont une section transversale circulaire.

6. Occultation pour créer des clôtures ou pour la décoration comprenant une pluralité de tiges selon l'une quelconque des revendications 1 à 5 reliées ensemble.
